Europäisches Patentamt

European Patent Office

Office européen des brevets

(19)

(11) Publication number: **0 201 468**
**A1**

(12) **EUROPEAN PATENT APPLICATION**

(21) Application number: **86850122.2**

(22) Date of filing: **10.04.86**

(51) Int. Cl.⁴: **B 01 D 53/34**, A 62 B 19/00

(30) Priority: **09.05.85 SE 8502322**

(43) Date of publication of application: **12.11.86**
**Bulletin 86/46**

(84) Designated Contracting States: **DE FR GB NL SE**

(71) Applicant: **ICOR AB, Ulvsundavägen 178B,**
**S-161 30 Bromma (SE)**

(72) Inventor: **Gedeon, Andras, Burschstigen 3A,**
**S-183 30 Täby (SE)**

(74) Representative: **Carminger, Lars, CARMINGER &**
**UUSITALO PATENTBYRA AB Box 3554,**
**S-103 69 Stockholm (SE)**

(54) **A device for removing carbon dioxide from a gas mixture.**

(57) A carbon-dioxide absorber, particularly intended for extracting carbon dioxide from respiratory gases in respirators, apparatus for administering anaesthetics, breathing apparatus and like apparatus, comprises a container (1), having an inlet (2) and an outlet (3) for the respiratory gas and enclosing an absorbent medium (5) in the form of a fibre structure in which there is absorbed and retained in liquid form a liquid solution of one or more substances capable of chemically binding carbon dioxide. An advantage is afforded when the liquid solution comprises an aqueous solution of one or more hydroxides of alkali metals and/or alkaline earth metals; a particular advantage is afforded when an aqueous sodium hydroxide solution is used. The fibre structure may comprise both fibre material highly capable of absorbing and retaining liquid and fibre material exhibiting but slight liquid-absorbing properties, this latter fibre material being arranged to form a matrix which separates the liquid-absorbing fibre material and ensures that the fibre structure as a whole obtains the desired degree of gas permeability. The liquid-absorbing and liquid-retaining fibre material may comprise, for example, a mixture of rayon and cotton fibres having bound thereto a highly liquid-absorbent cellulose derivative, for example carboxymethyl cellulose.

## A device for removing carbon dioxide from a gas mixture

The present invention relates to a device, a so-called carbon dioxide absorber, for removing carbon dioxide from a gas mixture. The device is intended primarily for extracting carbon dioxide from respiratory gas mixtures.

There is a great need within the field of medical auxiliaries for a device which enables carbon dioxide to be extracted from a mixture of respiratory gases, examples of such auxiliaries including respirators, apparatus for administering anaesthetics and apparatus for making a diagnosis or for taking scientific measurements of the respiratory system of a person. This need also prevails in the case of breathing apparatus used in circumstances under which it is impossible to breathe from the immediate surroundings, for example the breathing apparatus used by divers and by persons in other non-respiratory environments. A number of requirements are placed on such a carbon-dioxide absorber which are not placed on industrial absorbers used to extract carbon dioxide from a gas mixture. A carbon-dioxide absorber for use in respirators, anaesthetic apparatus, breathing apparatus and for like purposes must be absolutely safe, i.e. there must be no risk that the person connected to the apparatus will inspire harmful substances. The absorber must also have a low resistance to the passage of gas therethrough, so that the person connected to the absorber is able to breathe readily through the same. The absorber should have but relatively small volume and should be light in weight while still being effective. It should also be easy to use and inexpensive to manufacture, since the absorber is preferably intended for one-time use only.

The carbon-dioxide absorbers which are intended for use in the aforesaid fields and which have been totally predominant for several decennia, comprise a container provided with an inlet and an outlet for the gas mixture and containing an absorbent material which comprises a mixture of pieces or coarse granules of a mixture of sodium hydroxide and calcium hydroxide, sometimes in admixture with silica, and known as soda lime. The silica is added to harden the absorbent material and to reduce dust formation. Another absorbent material used in a similar manner is "Baralyme", which comprises a mixture of barium hydroxide and calcium hydroxide. Although these known carbon-dioxide absorbers have been available for a very long time, they are encumbered with certain drawbacks. For example, it must be strictly ensured that the solid absorbent material is fairly homogenous and, above all, that it contains no minute particles or dust capable of being inhaled by the person connected to the absorber. Consequently, it is necessary to construct the absorbent from hard and relatively large pieces of material, or coarsely granulated material. This results in a small specific contact surface area between the gas mixture and the carbon-dioxide binding compounds, and hence a large total volume of absorbent material is required to achieve effective absorption of the carbon dioxide present. In addition, when in use carbonates form on the surfaces of the pieces or granules of absorbent material, causing the material to be inactive with regard to the absorption of carbon dioxide, despite the fact that the significant total quantity of material located beneath these coated surfaces is still capable of binding carbon dioxide. Further, these absorbents take up significant quantities of moisture and heat from the absorption process, and as a result thereof the granules tend to agglomerate or "bake together", thereby increasing the resistance to the passage of gas therethrough. This gives rise to an increased throughflow resistance and an uneven and ineffective use of the absorbent material. As a consequence, only a relatively small proportion of sodium hydroxide can be used in soda lime, despite the fact that this compound is the most effective with regard to the absorption of the carbon dioxide.

Accordingly, the object of the present invention is to provide, primarily for the aforesaid purpose, a carbon-dioxide absorber which constitutes a considerable improvement on the aforementioned known carbon-dioxide absorbers in the respects discussed above and which can be manufactured in a rational manner capable of being adapted to large scale production.

As with the prior art absorbers, the carbon-dioxide absorber according to the invention also includes a container provided with an inlet and an outlet for the gas mixture to be treated and containing an absorbent material composed of substances which are capable of chemically binding carbon dioxide. The absorber according to the invention is mainly characterized in that the absorbent material comprises a finely-divided, gas-permeable fibre structure having absorbed therein a liquid solution which contains one or more substances capable of chemically binding carbon dioxide and which is retained in the fiber structure in liquid form.

Because the carbon-dioxide binding material present in the absorber according to the invention has the form of a finely-divided liquid solution, there is no risk that dust will form and, consequently, that harmful substances will be inspired by the person connected to the absorber. Furthermore, because the liquid solution is absorbed in a fibrous structure, an extremely large specific surface area is presented for contact of the gas mixture flowing through the structure with the carbon dioxide binding substance contained in said structure, therewith achieving a high degree of efficiency. Another advantage afforded by an absorber according to the invention is that the rate at which efficiency diminishes due to the formation of carbonates is relatively slow. This enables an effective absorber to be produced in small dimensions and at low weights. These advantages are particularly noticeable in an absorber which is intended to be used for only a relatively short period of time. In this latter respect it was previously necessary to use absorbers of relatively large dimensions and heavy weights.

Fibre material capable of absorbing very large quantities of liquid in relation to its weight and volume in a dry state and also capable of retaining the liquid absorbed so effectively as to render it practically impossible to extract the liquid from the fibrous material other than by forced evaporation is readily available on the market. The use of such fibre material fully ensures that no harmful or deleterious substance can leave the absorber and be carried to the person connected thereto. One such known highly absorbent material is that manufactured and sold by Uddeholms AB, Sweden, under the designation SECOSORB, which comprises a highly absorbent cellulose derivative, namely porous, granulated carboxy-methyl cellulose having a particle size of about 1 mm. This highly absorbent material can be given a felted or wadding-like structure, by incorporating the same in a rayon fibre or cotton fibre matrix. It will be understood, however, that the carbon dioxide absorber according to the invention may comprise any suitable type of material having a gas-permeable, fibre-like structure capable of absorbing and positively retaining, in liquid form, large quantities of liquid in relation to its volume. Because the liquid present is bound solely to the actual fibres themselves, therewith leaving the interstices between respective fibres free from liquid, the liquid - impregnated fibre structure exhibits good gas permeability, this permeability remaining at its original level throughout the use of the absorber.

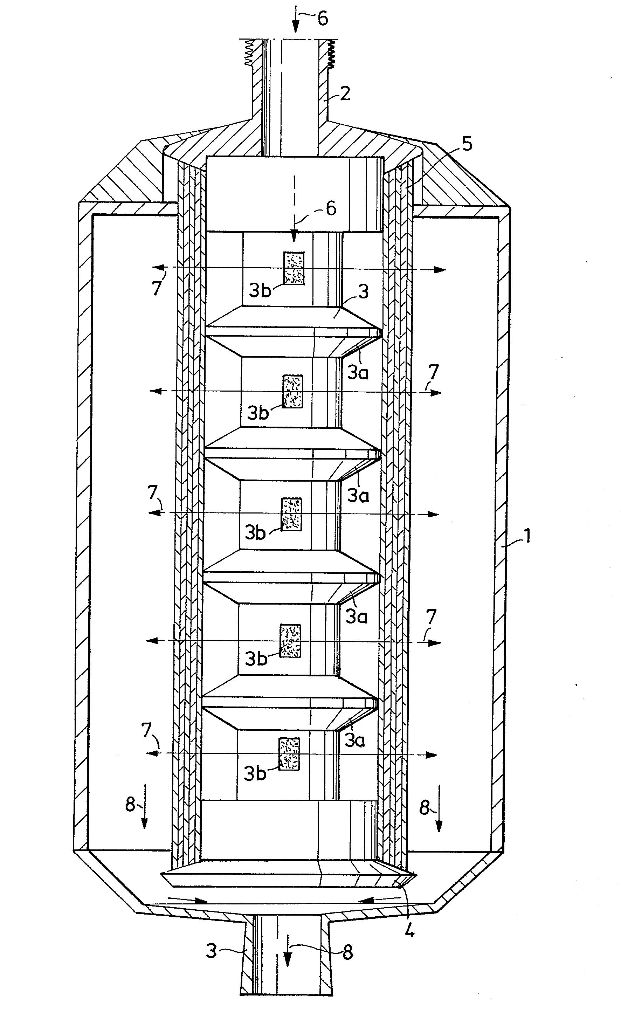

In addition to containing fibre material capable of absorbing and retaining large quantities of liquid, the fibre structure of an absorber according to the invention may also incorporate fibre material having but slight absorbent properties, the purpose of this fibre material being to separate the liquid absorbent fibre material and to impart a desired degree of gas permeability to the fibre structure as a whole. One suitable fibre material possessing but slight liquid-absorbing qualities may, for example, comprise polypropylene bi-component fibres and may also have the form of a felted or wadding-like structure. An advantage is gained when the liquid-absorbing fibre material and the substantially non-absorbing fiber material are placed

in alternate layers. An absorber according to the invention may be constructed, for example, in the manner illustrated schematically, and in section, in the accompanying drawing.

The absorber according to the invention comprises a rigid outer, substantially cylindrical container 1 having provided at one end thereof an inlet 2 for the gas to be treated and at the other end thereof an outlet 3 for the treated gas. The inlet 2 is adapted to carry an elongated, hollow, substantially tubular support element 3 which extends co-axially within the outer container 1, and the end of which remote from the inlet 2 is closed with the aid of a plug or end wall 4. Although the supporting element 3 is essentially cylindrical, it presents a plurality of annular, outwardly protruding fins or flanges 3a, and a number of apertures 3b are formed in the wall of said element. This supporting element 3 carries the absorbent material 5, which comprises a plurality of cylindrical layers of felted or wadding-like fibre structures encircling the element 3. These mutually co-axial and superposed fibre layers comprise alternately a highly absorbent fibre structure having absorbed and retained therein a liquid solution comprising a carbon-dioxide absorbent, for example an aqueous sodium-hydroxide solution, in liquid form and a fibre structure which possesses but slight liquid absorbing properties, for example a polypropylene bi-component structure.

As illustrated by the arrows 6, the carbon-dioxide containing gas entering the inlet 2 is guided into the interior of the supporting element 3, from where it passes through the apertures 3b and subsequently through the layered cylindrical fibre structure 5, as illustrated by the arrows 7. As the gas passes through the fibre structure 5, ingoing carbon dioxide is extracted from the gas by chemical co-action with the liquid solution of carbon-dioxide binding substance absorbed in and retained by the fibre structure. Subsequent to passing through the carbon-dioxide absorbing fibre structure 5, the gas, now cleansed of its carbon dioxide content, is led out through the outlet 3, as illustrated by the arrows 8.

It will be understood, however, that an absorber according to the invention may be constructed in ways other than that described above.

An advantage is afforded when the liquid absorbed in and retained by the fibre structure of an absorber according to the invention comprises an aqueous solution of one or more carbon-dioxide binding compounds, such as primarily hydroxides of alkali metals and/or alkaline earth metals, such as sodium hydroxide (NaOH), barium hydroxide (Ba(OH)$_2$), potassium hydroxide (KOH), and calcium hydroxide (Ca(OH)$_2$). Particular advantage is achieved when there is used an aqueous solution containing 40-50% NaOH. It will be understood, however, that other liquid-soluble compounds capable of binding carbon dioxide may also be used. Although water would seem to be a highly advantageous solvent in this regard, because it is inexpensive, innocuous and relatively non-volatile at normal temperatures, it will be understood that other solvents may also be used, provided that they can be absorbed by and bound in liquid form to the fibre structure used.

Although the absorber according to the invention has been developed primarily, and to particular advantage, for the removal of carbon dioxide from respiratory gases in conjunction with respirators, apparatus for administering

7

0201468

anaesthetics, breathing apparatus, and like applications, the absorber may, of course, be used in other connections where carbon dioxide is to be extracted from a carbon-dioxide containing gas mixture.

CLAIMS

1. A device for removing carbon dioxide from a gas mixture, particularly from respiratory gases, comprising a container having an inlet and an outlet for the gas mixture and enclosing an absorbent medium containing substances capable of chemically binding carbon dioxide, characterized in that the absorbent medium comprises a fibre structure having absorbed and retained therein in liquid form a liquid solution of one or more substances capable of chemically binding carbon dioxide.

2. A device according to Claim 1, characterized in that the liquid solution comprises an aqueous solution of one or more hydroxides of alkali metals and/or alkaline earth metals, such as NaOH, $Ba(OH)_2$, KOH, $Ca(OH)_2$ for example.

3. A device according to Claim 2, characterized in that the liquid solution is an aqueous solution containing 40-50% NaOH.

4. A device according to any of Claims 1 - 3, characterized in that the fibre structure contains both fibre material which is highly capable of absorbing and retaining liquid and a fibre material of relatively slight liquid-absorbing ability, this latter fibre material being arranged to form a matrix which separates the liquid-absorbing fibre material and ensures the desired degree of gas permeability of the fibre structure.

5. A device according to Claim 4, characterized in that the two fibre materials of mutually different absorbability are arranged in alternate layers.

6. A device according to any of Claims 1 - 5, characterized in that the fibre structure is a felted structure.

0201468

7. A device according to any of Claims 1 - 6, characterized in that the liquid-absorbing and liquid-retaining fibre material comprises a mixture of rayon  and cotton fibres and a highly liquid-absorbent cellulose derivative bound thereto.

8. A device according to Claim 7, characterized in that the cellulose derivative is carboxymethylcellulose.

9. A device according to Claim 4, characterized in that the inactive fibre material comprises polypropylene bi-component fibres.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | NL-C- 52 589 (UILEM ECKHARDT) <br> * Page 2, line 55 - page 3, line 17; figures 1-3 * | 1,2 | B 01 D 53/34 <br> A 62 B 19/00 |
| Y |  | 1,2,6 | |
| Y | US-A-3 800 516 (B.R. PALUCH) <br> * Column 3, line 64 - column 4, line 63; figures 1-4 * | 1,2,6 | |
| Y | FR-A-2 230 396 (SIEMENS AG) <br> * Whole document * | 1,2 | |
| A | FR-A-2 252 120 (INSTITUT FRANCAIS DU PETROLE) | | |
| A | US-A-3 660 023 (L.K. FREVEL) | | TECHNICAL FIELDS SEARCHED (Int. Cl.4) <br><br> B 01 D <br> A 62 B |
| A | US-A-2 115 973 (C.S. FLEMING) | | |

The present search report has been drawn up for all claims

| Place of search | Date of completion of the search | Examiner |
|---|---|---|
| THE HAGUE | 27-06-1986 | PYFFEROEN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82